# EUROPEAN PATENT APPLICATION

(11) **EP 4 361 874 A1**
(43) Date of publication of application: **01.05.2024**
(21) Application number: 22212396.0
(22) Date of filing: 09.12.2022
(51) Int. Cl.: G06F 21/70, G06F 21/81, G06F 21/86

(54) **CASE TAMPERING DETECTION DEVICE AND METHOD FOR COMPUTER SYSTEM**

(30) Priority: 28.10.2022 TW 111141095
(71) Applicant: Moxa Inc., New Taipei City 242 (TW)
(72) Inventor: TAN, YOONG TAK, 242 New Taipei City (TW); Chou, Chia-Te, 242 New Taipei City (TW); Liao, Jian-Yu, 242 New Taipei City (TW); Lin, Tsung-Yi, 242 New Taipei City (TW)
(74) Representative: Straus, Alexander

(57) **Abstract**

A case tampering detection device (1) is provided. The case tampering detection device (1), used for a computer system covered with a computer case, includes at least one detector (10) for detecting whether the computer case is opened and generating a detection result; a storage unit (40); a microcontroller unit (30), coupled to the storage unit (40), for generating a case tampering event and storing the case tampering event in the microcontroller unit (30) or the storage unit (40) when being powered; and a power supply unit (20), coupled to the at least one detector (10), for receiving the detection result, and supplying power to the microcontroller unit (30) when the detection result indicates that the computer case is opened.

## Description

### Field of the Invention

The present invention relates to a case tampering detection device and a case tampering detection device of a computer system, and more particularly, to a case tampering detection device and a case tampering detection device for timely supplying power to record a case tampering event and a time stamp in a computer system.

### Background of the Invention

When a case of a computer system is opened, a microcontroller unit of the computer system may correspondingly record a case tampering event. However, when the computer system is off (unpowered or powered off), the microcontroller unit is powered only by a mercury battery, a lithium battery or a super capacitor, and the power may be run out within a specific period of time (such as two weeks), making the microcontroller unit unable to reliably record the case tampering event and prevent the tampering event from occurring. Under such circumstances, how to improve the power supply mode of the computer system in the shutdown state has become one of the goals of the industry.

### Summary of the Invention

Therefore, the purpose of the present invention is to provide a case tampering detection device and a case tampering detection device of a computer system to improve the drawback of the prior art.

This is achieved by a case tampering detection device and a case tampering detection method according to claims 1 and 7. The dependent claims pertain to corresponding further developments and improvements.

As will be seen more clearly from the detailed description following below, a case tampering detection device is disclosed herein. The case tampering detection device, which is used for a computer system covered with a computer case, includes at least one detector, for detecting whether the computer case is opened, and generating a detection result; a storage unit; a microcontroller unit, coupled to the storage unit, for generating a case tampering event and storing the case tampering event in the microcontroller unit or the storage unit when being powered; and a power supply unit, coupled to the at least one detector, for receiving the detection result, and supplying power to the microcontroller unit when the detection result indicates that computer case is opened.

In another aspect of the invention, a claimed case tampering detection method is disclosed in the detailed description here below. the case tampering detection method, which is used for a computer system, includes: detecting whether a computer case of the computer system is opened, and generating a detection result; when the detection result indicates that the computer case is opened, a power supply unit of the computer system supplying power to a microcontroller unit of the computer system to generate a case tampering event and store the case tampering event in the microcontroller unit or a storage unit of the computer system.

### Brief Description of the Drawings

FIG. 1 is a schematic diagram illustrating a case tampering detection device according to an embodiment of the present invention.
FIG. 2 is a schematic diagram illustrating a power supply unit in FIG.1 according to an embodiment of the present invention.
FIG. 3 is a schematic diagram illustrating a micro switch according to an embodiment of the present invention.
FIG. 4, FIG. 5, FIG. 6 are schematic diagrams illustrating case tampering detection devices according to different embodiments of the present invention.
FIG. 7 is a flowchart of a case tampering detection method according to another embodiment of the present invention.

### Detailed Description

Certain terms are used throughout the description and following claims to refer to particular components. As one skilled in the art will appreciate, hardware manufacturers may refer to a component by different names. This document does not intend to distinguish between components that differ in name but not function. In the following description and in the claims, the terms "include" and "comprise" are utilized in an open-ended fashion, and thus should be interpreted to mean "include, but not limited to". Also, the term "couple" is intended to mean either an indirect or direct electrical connection. Accordingly, if one device is coupled to another device, that connection may be through a direct electrical connection, or through an indirect electrical connection via other devices and connections.

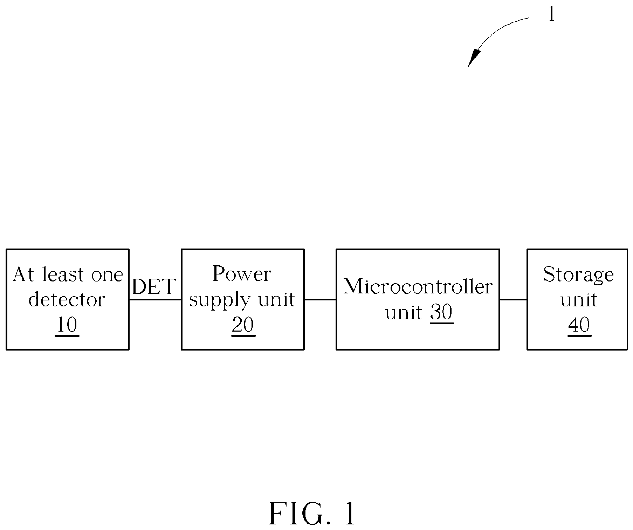

Please refer to FIG. 1. FIG. 1 is a schematic diagram of a case tampering detection device 1 according to an embodiment of the present invention. The case tampering detection device 1 is utilizing for a computer system, and the computer system is covered by a computer case. The case tampering detection device 1 includes at least one detector 10, a power supply unit 20, a microcontroller unit (MCU) 30 and a storage unit 40. The at least one detector 10 is utilizing for detecting whether the computer case is opened, and generating a detection result DET. When the computer system is powered, the MCU 30 may respond to the case tampering event (e.g., record the case tampering event, stop system operation, stop booting the computer) when the detection result DET indicates that the computer case of the computer system is opened. However, when the computer system is powered off (e.g., a malicious user intentionally cuts off the power), the computer system may not receive power from an external power source (such as utility power). In this case, the power supply unit 20 is an auxiliary power source compared to the external power source, which may include a mercury battery, a lithium battery or a super capacitor, but is not limited thereto. The power supply unit 20 is coupled to the at least one detector 10 for receiving the detection result DET generated by the at least one detector 10 when the computer system is in a power-off, idle or dormant state, and determining whether to output power to the MCU 30 according to the detection result DET. The MCU 30 is coupled to the storage unit 40. When the detection result DET indicates that the computer case of the computer system is opened, the power supply unit 20 outputs power to the MCU 30 to generate a case tampering event and stores the case tamping event in the MCU 30 or the storage unit 40. In this way, when the computer system is not powered on, if the computer case is opened, the MCU 30 may be driven by the power supply unit 20 to generate the case tampering event accordingly. In addition, the MCU 30 may perform the following tasks: recording the case tampering event in the MCU 30 or the storage unit 40, or deleting random bytes generated by a trusted platform module (TPM) according to the case tampering event. It should be noted that for illustrative concerns, both tasks are performed in the following embodiments. Meanwhile, although the power of the power supply unit 20 is relatively small compared to the external power supply, the power supply unit 20 supplies power to the MCU 30 to record the case tampering event only when the at least one detector 10 detects that the computer case is opened. Therefore, even if the computer system is not powered on, the power of the power supply unit 20 may maintain the function of supplying power to the MCU 30 to record the case tampering event.

In short, in the case tampering detection device 1, after the at least one detector 10 detects that the computer case is opened, the power supply unit 20 starts to supply power to the MCU 30 to record the case tampering event, thereby reducing power consumption and maintaining the case tamping detection function for a longer time.

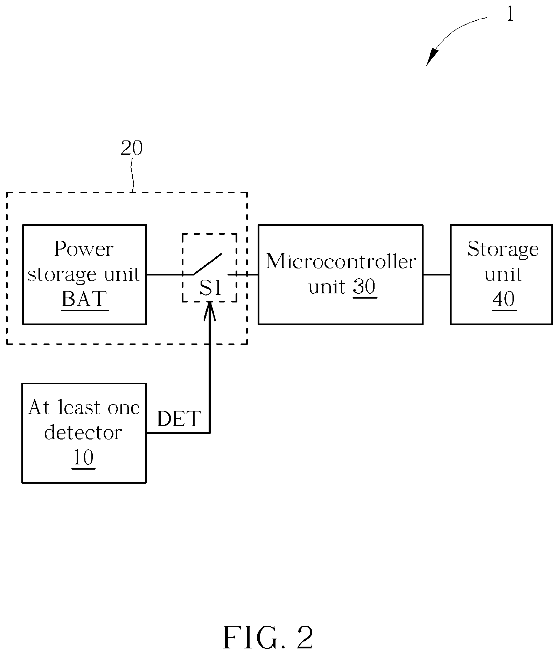

It should be noted that FIG. 1 is only the embodiment of the present invention, and those skilled in the art may make appropriate adjustments according to the system requirements. For example, in order to achieve that the power is supplied to the MCU 30 only when the computer case is opened, as shown in FIG. 2, the power supply unit 20 may include a power storage BAT and a switch S1. The power storage unit BAT may be a mercury battery, a lithium battery, a super capacitor, or any other element capable of storing electric power, and is not limited thereto. The switch S1 is controlled by the detection result DET generated by the at least one detector 10 to determine whether to turn on the power storage unit BAT or the MCU 30. Specifically, when the detection result DET indicates the computer case is opened, the detection result DET may enable the switch S1 to turn on the power storage unit BAT or the MCU 30, thereby driving the MCU 30 to record the case tampering event.

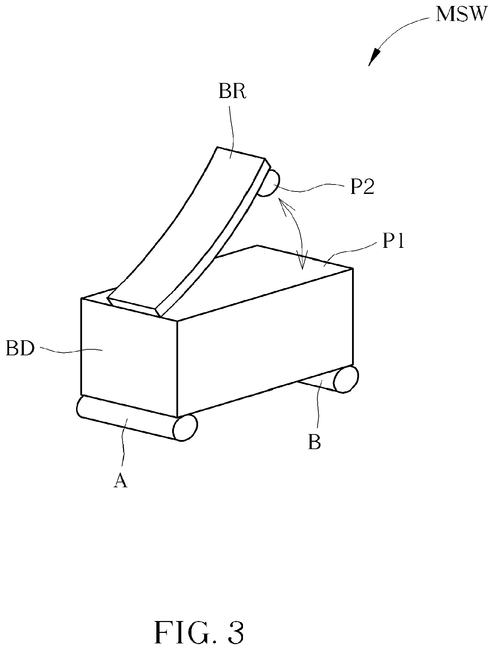

It should be noted that the detection result DET represents a signal generated by the at least one detector 10 corresponding to whether the computer case is opened, and those skilled in the art may appropriately adjust the detection result DET according to the system requirements. For example, in an embodiment, the at least one detector 10 and the switch S1 may be implemented by a micro switch MSW, as shown in FIG. 3. The micro switch MSW includes a lever BR and a switch body BD. The switch body BD determines whether to conduct a connection between terminals A and B according to whether the lever BR is at a position P1 or a position P2. The operation principle of the micro switch MSW should be well known in the art, so it is not repeated here. When the at least one detector 10 and the switch S1 are implemented by the micro switch MSW, the at least one detector 10 may correspond to the lever BR, the switch S1 may correspond to the switch body BD, and the detection result DET may correspond to the position of the lever BR. In this case, as long as the position of the micro switch MSW relative to the computer case is properly set, when the computer case is opened, the connection between the terminal A and the terminal B is conducted, thereby implementing the functionalities of the at least one detector 10 and the switch S1.

FIG. 2 and FIG. 3 illustrate possible implementations of the case tampering detection device 1. Any device that may only supply power to the MCU 30 to record the case tampering event when the computer case is opened may be used to implement the case tampering detection device 1, but is not limited thereto.

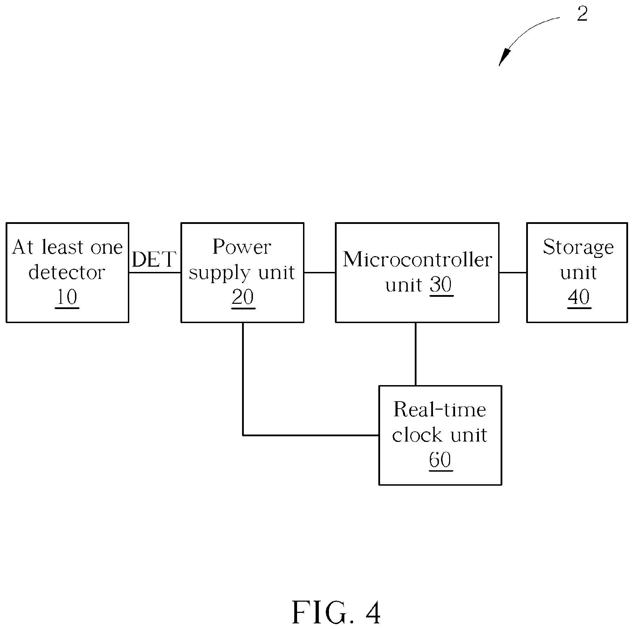

On the other hand, in addition to recording the occurrence of the case tampering event, in another embodiment, the present invention may further record an occurrence time of the case tampering event. Please refer to FIG. 4. FIG. 4 is a schematic diagram illustrating a case tampering detection device 2 according to another embodiment of the present invention. The case tampering detection device 2 is derived from the case tampering detection device 1, so the elements are represented by the same symbols. The difference between the case tampering detection device 2 and the case tampering detection device 1 is that the case tampering detection device 2 further includes a real-time clock (RTC) unit 60 for providing real time. The RTC unit 60 has the characteristics of low power consumption. In the embodiment, when the computer system is in the power-off, idle or dormant state, the power supply unit 20 may continuously supply power to the real-time clock unit 60. For example, if the power supply unit 20 is implemented by the power storage unit BAT and the switch S1 in FIG. 2, the real-time clock unit 60 is directly coupled to the power storage unit BAT to continuously provide the real time. In this case, when the detection result DET indicates the computer case is opened, the MCU 30 receives the power from the power supply unit 20 to generate the case tampering event and generate a time stamp at the same time according to the real time. The case tampering event and the time stamp are stored in the MCU 30 or the storage unit 40. In this way, the user may obtain the information of the case tampering event of the computer system and the corresponding real time. Since the power consumption of the real-time clock unit 60 is very low, the power supply unit 20 is sufficient to supply power to the MCU 30 to record the case tampering event and the time stamp for a long time when the computer system in the power-off, idle or dormant state.

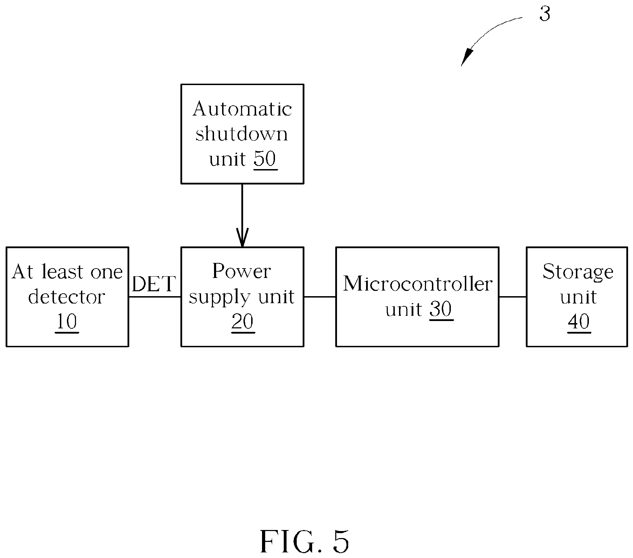

Furthermore, in order to extend the usage time more effectively, in another embodiment, the present invention may also add an automatic shutdown function, so that the power supply unit 20 may stop supplying power. Please refer to FIG. 5. FIG. 5 is a schematic diagram of the case tampering detection device 3 according to an embodiment of the present invention. The case tampering detection device 3 is derived from the case tampering detection device 1, so the elements are represented by the same symbols. The difference between the case tampering detection device 3 and the case tampering detection device 1 is that the case tampering detection device 3 further includes an automatic shutdown unit 50 for instructing the power supply unit 20 to stop supplying power to the MCU 30 after the power supply unit 20 supplies power to the MCU 30 for a predetermined time. It should be noted that the predetermined time may be the time required by the MCU 30 to perform the following tasks: recording the case tampering event in the MCU 30 or the storage unit 40, or deleting the random bytes generated by TPM according to the case tampering event, and not limited thereto. For example, if the power supply unit 20 is implemented by the power storage unit BAT and the switch S1 in FIG. 2, the switch S1 is not only controlled by the detection result DET generated by the at least one detector 10, but also controlled by the automatic shutdown unit 50. Specifically, when the power supply unit 20 supplies power to the MCU 30 according to the detection result DET for the predetermined time, the automatic shutdown unit 50 may instruct the power supply unit 20 (for example, by controlling the switch S1) to be shut down so that the power supply unit 20 stops supplying power to the MCU 30. In this way, the case tampering detection device 3 may timely stop the power supply unit 20 from supplying power through the automatic shutdown unit 50 to ensure that the case tampering detection function may maintain for a longer time.

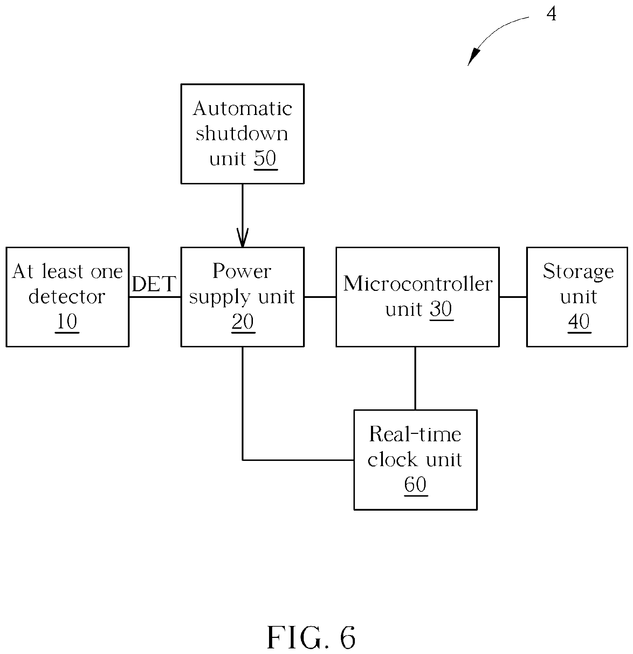

It should be noted that the case tampering detection devices 1-3 are different embodiments of the present invention, those skilled in the art may make different modifications accordingly, and are not limited thereto. For example, FIG. 6 is a schematic diagram of the case tampering detection device 4 according to another embodiment of the present invention. The case tampering detection device 4 is derived from the case tampering detection device 1, and simultaneously integrates the RTC unit 60 of the case tampering detection device 2 and the automatic shutdown unit 50 of the case tampering detection device 3. Therefore, the case tampering detection device 4 may record the information and corresponding time of the case tampering event in the computer system. At the same time, the power supply unit 20 may timely stop supplying power by the automatic shutdown unit 50, so as to ensure that the case tampering detection function may maintain for a longer time. For power consumption in various operating modes, please refer to Table 1. Table 1 illustrates test results of the case tampering detection device 4 detecting whether the computer case is opened. As shown in Table 1, when the computer system is in the dormant state, only the RTC unit 60 consumes the power of the power supply unit 20, so the detection function may be maintained for 383.04 days. When the computer case is opened, the power supply unit 20 supplies power to the MCU 30 to record the case tampering event and the time stamp, and deletes the random bytes generated by the TPM. If the power supply unit 20 still supplies power to the MCU 30, the detection function may only be maintained for 5.54 days. If the automatic shutdown unit 50 instructs the power supply unit 20 to stop supplying power to the MCU 30 after the power supply unit 20 supplies power to the MCU 30 for the predetermined time, the detection function may be maintained for 335.16 days. It should be noted that the case tampering detection device 1 does not include the RTC unit 60. In other words, when the computer system 1 is in the dormant state, the power supply unit 20 of the case tampering detection device 1 will not consume any power, so the detection function may be maintained much longer than one year.

**Table 1**

| | Description of the computer system | Total current (mA) | Detection function maintenance time (days) |
|---|---|---|---|
| The computer system in dormant state | MCU 30: off; RTC unit 60: on | 0.007 | 383.04 |
| After case tampering, the power supply unit 20 supplies power | MCU 30: on; RTC unit 60: off; Automatic shutdown unit 50: off | 0.484 | 5.54 |
| After case tampering, the power supply unit 20 supplies power | MCU 30: on; RTC unit 60: on; Automatic shutdown unit 50: on | 0.008 | 335.16 |

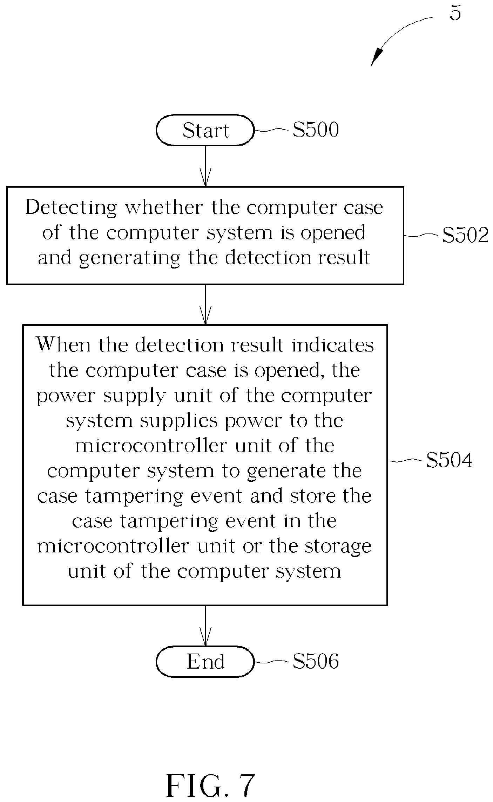

Finally, the operations of the case tampering detection devices 1-4 may be summarized as a case tampering detection method 5, as shown in FIG. 7. The case tampering detection method 5 includes the following steps:

| | | |
|---|---|---|
| Step S500: | Start. | |
| Step S502: | Detecting whether the computer case of the computer system is opened and | |
| | | generating the detection result. |
| Step S504: | When the detection result indicates the computer case is opened, the power | |
| | | supply unit of the computer system supplies power to the microcontroller |
| | | unit of the computer system to generate the case tampering event and store |
| | | the case tampering event in the microcontroller unit or the storage unit of the |
| | | computer system. |
| Step S506: | End. | |

The detail description and derivative changes of the process 5 are described as above, and will not repeated here.

It should be noted that the case tampering detection devices 1-4 are different embodiments of the present invention. Those skilled in the art should readily make combinations, modifications and/or alterations on the abovementioned description and examples. The abovementioned description, steps, procedures and/or processes including suggested steps can be realized by means that could be hardware, software, firmware (known as a combination of a hardware device and computer instructions and data that reside as read-only software on the hardware device), an electronic system, or combination thereof. Examples of hardware can include analog, digital and mixed circuits known as microcircuit, microchip, or silicon chip. Examples of the electronic system may include a system on chip (SoC), system in package (SiP), a computer on module (CoM) and the computer system 1. Any of the abovementioned procedures and examples above may be compiled into program codes or instructions that are stored in a storage unit 40. The storage unit 40 may include read-only memory (ROM), flash memory, random access memory (RAM), subscriber identity module (SIM), hard disk, or CD-ROM/DVD-ROM/BD-ROM, but not limited thereto. The MCU 30 may read and execute the program codes or the instructions stored in the storage unit 40 for realizing the abovementioned functions.

In addition, the case tampering event and the time stamp recorded by the present invention may be used as a reference for safe booting. When the computer system is powered on, if the case tampering event is recorded and the random bytes generated by the TPM are deleted, the computer system will make the safe boot fail to protect the security of the computer system.

In summary, the case tampering detection device and the case tampering detection method of the present invention supply power to the MCU to record the case tampering event and the time stamp, and delete the random bytes generated by the TPM after detecting that the computer case is opened, and further stop supplying power after the predetermined time. In this way, compared with the prior art, the case tampering detection function of the computer system can be maintained for a longer time.

## Claims

1. A case tampering detection device (1), used for a computer system covered with a computer case, **characterized by** comprising:
at least one detector (10), for detecting whether the computer case is opened, and generating a detection result;
a storage unit (40);
a microcontroller unit (30), coupled to the storage unit (40), for generating a case tampering event and storing the case tampering event in the microcontroller unit (30) or the storage unit (40) when being powered; and
a power supply unit (20), coupled to the at least one detector (10), for receiving the detection result, and supplying power to the microcontroller unit (30) when the detection result indicates that computer case is opened.

2. The case tampering detection device (1) of claim 1, **characterized by** further comprising:
an automatic shutdown unit (50), for instructing the power supply unit (20) to stop supplying power to the microcontroller unit (30) after the power supply unit (20) supplies power to the microcontroller unit (30) for a predetermined time.

3. The case tampering detection device (1) of claim 1, **characterized by** further comprising:
a real-time clock unit (60), coupled to the storage unit (40), for generating a time stamp;
wherein the microcontroller unit (30) stores the time stamp in the storage unit (40) when the detection result indicates that the computer case is opened.

4. The case tampering detection device (1) of claim 1, **characterized in that** the power supply unit (20) does not supply power to the microcontroller unit (30) when the detection result indicates that the computer case is not opened.

5. The case tampering detection device (1) of claim 1, **characterized in that** the power supply unit (20) is a mercury battery, a lithium battery or a super capacitor.

6. The case tampering detection device (1) of claim 1, **characterized in that** the at least one detector is a micro switch (MSW).

7. A case tampering detection method, used for a computer system, **characterized by** comprising:
detecting whether a computer case of the computer system is opened, and generating a detection result;
when the detection result indicates that the computer case is opened, a power supply unit (20) of the computer system supplying power to a microcontroller unit (30) of the computer system to generate a case tampering event and store the case tampering event in the microcontroller unit (30) or a storage unit (40) of the computer system.

8. The case tampering detection method of claim 7, **characterized by** further comprising:
after the power supply unit (20) supplies power to the microcontroller unit (30) for a predetermined time, an automatic shutdown unit of the computer system instructing the power supply unit (20) to stop supplying power to the microcontroller unit (30).

9. The case tampering detection method of claim 7, **characterized by** further comprising:
when the detection result indicates that the computer case is opened, the microcontroller unit (30) storing a time stamp generated by a real-time clock unit (60) of the computer system in the storage unit (40).

10. The case tampering detection method of claim 7, **characterized in that** when the detection result indicates that the computer case is not opened, the power supply unit (20) does not supply power to the microcontroller unit (30).

## Amended claims

### Amended claims in accordance with Rule 137(2) EPC.

1. A case tampering detection device (1), used for a computer system covered with a computer case, **characterized by** comprising:
at least one detector (10), for detecting whether the computer case is opened, and generating a detection result;
a storage unit (40);
a microcontroller unit (30), coupled to the storage unit (40), for generating a case tampering event and storing the case tampering event in the microcontroller unit (30) or the storage unit (40) when being powered;
a power supply unit (20), coupled to the at least one detector (10), for receiving the detection result, and supplying power to the microcontroller unit (30) when the detection result indicates that computer case is opened; and
a real-time clock unit (60), coupled to the storage unit (40), for generating a time stamp;
wherein the microcontroller unit (30) stores the time stamp in the storage unit (40) when the detection result indicates that the computer case is opened;
wherein the power supply unit (20) continuously supply power to the real-time clock unit (60), when the computer system is in a power-off, idle or dormant state.

2. The case tampering detection device (1) of claim 1, **characterized by** further comprising:
an automatic shutdown unit (50), for instructing the power supply unit (20) to stop supplying power to the microcontroller unit (30) after the power supply unit (20) supplies power to the microcontroller unit (30) for a predetermined time.

3. The case tampering detection device (1) of claim 1, **characterized in that** the power supply unit (20) does not supply power to the microcontroller unit (30) when the detection result indicates that the computer case is not opened.

4. The case tampering detection device (1) of claim 1, **characterized in that** the power supply unit (20) is a mercury battery, a lithium battery or a super capacitor.

5. The case tampering detection device (1) of claim 1, **characterized in that** the at least one detector is a micro switch (MSW).

6. The case tampering detection device (1) of claim 1, **characterized in that** the microcontroller unit (30) deletes random bytes generated by a trusted platform module according to the case tampering event.

7. A case tampering detection method, used for a computer system, **characterized by** comprising:
detecting whether a computer case of the computer system is opened, and generating a detection result;
when the detection result indicates that the computer case is opened, a power supply unit (20) of the computer system supplying power to a microcontroller unit (30) of the computer system to generate a case tampering event and store the case tampering event in the microcontroller unit (30) or a storage unit (40) of the computer system;
when the detection result indicates that the computer case is opened, the microcontroller unit (30) storing a time stamp generated by a real-time clock unit (60) of the computer system in the storage unit (40);
wherein the power supply unit (20) continuously supply power to the real-time clock unit (60), when the computer system is in a power-off, idle or dormant state.

8. The case tampering detection method of claim 7, **characterized by** further comprising:
after the power supply unit (20) supplies power to the microcontroller unit (30) for a predetermined time, an automatic shutdown unit of the computer system instructing the power supply unit (20) to stop supplying power to the microcontroller unit (30).

9. The case tampering detection method of claim 7, **characterized in that** when the detection result indicates that the computer case is not opened, the power supply unit (20) does not supply power to the microcontroller unit (30).
